# EUROPEAN PATENT APPLICATION

(11) **EP 4 366 355 A1**
(43) Date of publication of application: **08.05.2024**
(21) Application number: 22853290.9
(22) Date of filing: 12.07.2022
(51) Int. Cl.: H04W 16/14, H04W 16/10, H04W 72/04, H04W 72/56, H04W 76/16, H04W 88/08, H04W 72/12

(54) **BASE STATION AND METHOD FOR SUPPORTING PLURALITY OF WIRELESS COMMUNICATION MODES**

(30) Priority: 02.08.2021 KR 20210101560; 21.03.2022 KR 20220034531
(71) Applicant: Samsung Electronics Co., Ltd., Suwon-si, Gyeonggi-do 16677 (KR)
(72) Inventor: AHN, Jinsoo, Suwon-si, Gyeonggi-do 16677 (KR); XUE, Peng, Suwon-si, Gyeonggi-do 16677 (KR); KIM, Hyoji, Suwon-si, Gyeonggi-do 16677 (KR); PARK, Sangwon, Suwon-si, Gyeonggi-do 16677 (KR); LEE, Dongwoo, Suwon-si, Gyeonggi-do 16677 (KR); SEOL, Jiyun, Suwon-si, Gyeonggi-do 16677 (KR)
(74) Representative: HGF
(86) International application number: PCT/KR2022/010135
(87) International publication number: WO 2023/013911

(57) **Abstract**

A method device according to various embodiments comprises a communication module and a processor. The processor can: use at least one network among a plurality of networks and identify bearers to which frequency resources shared by the plurality of networks should be allocated; determine, on the basis of the identified bearers, the network that is to allocate the frequency resources at the next unit time among the plurality of networks; and allocate at least a portion of the frequency resources to at least a portion of the identified bearers on the basis of the determined network.

## Description

### [Technical Field]

Various embodiments of the disclosure relate to a base station for supporting a plurality of wireless communication modes and a method thereof and, more particularly, to a base station for scheduling frequency resources shared between a plurality of wireless communication modes and a method thereof.

### [Background Art]

Conventionally, a frequency band available for each communication mode was exclusively predetermined and used. However, while the frequency resources are limited, the communication modes gradually become diverse and advanced, so a situation where a plurality of wireless communication modes should share the frequency resources occurs.

A method by which a plurality of wireless communication technologies can use the same frequency band may include a method of dividing the frequency/time and predetermining a wireless communication technology to use each frequency band/time band or a method of using a frequency band after identifying whether the frequency band to be used by another wireless communication technology is used.

### [Disclosure of Invention]

### [Technical Problem]

In order to support a plurality of wireless communication modes sharing frequency resources, a base station may pre-schedule the frequency resources or may sense carriers and schedule carriers which are not being used. When the base station pre-schedule frequency resources, frequency resource allocation is not dynamic and thus may not satisfy the QoS. When the base station senses carriers and schedules frequency resources, it may take longer time to sense the carriers and thus service provision may be delayed.

### [Solution to Problem]

A network device according to various embodiments includes a communication module and a processor, wherein the processor is configured to identify bearers which use at least one of a plurality of networks and to which frequency resources shared between the plurality of networks should be allocated, determine a network to allocate the frequency resources in a next unit time among the plurality of networks, based on the identified bearers, and allocate at least some of the frequency resources to at least some of the identified bearers, based on the determined network.

A method of operating a network device according to various embodiments includes identifying bearers which use at least one of a plurality of networks and to which frequency resources shared between the plurality of networks should be allocated, determining a network to allocate the frequency resources in a next unit time among the plurality of networks, based on the identified bearers, and allocating at least some of the frequency resources to at least some of the identified bearers, based on the determined network.

### [Advantageous Effects of Invention]

According to various embodiments of the disclosure, a base station can combine and schedule frequency resources shared between a plurality of networks, so as to simultaneously support the plurality of networks.

According to various embodiments of the disclosure, the base station can efficiently use frequency resources by scheduling frequency resources for electronic devices or bearers using a plurality of networks sharing frequency resources in each unit time.

According to various embodiments of the disclosure, the base station can fairly distribute frequency resources to a plurality of networks, guarantee QoS for each service, and reduce delay.

### [Brief Description of Drawings]

FIG. 1 is a block diagram illustrating an electronic device within a network environment according to various embodiments.
FIGs. 2A, 2B, and 2C illustrate wireless communication systems providing networks of legacy communication and/or 5G communication according to various embodiments.
FIGs. 3A and 3B illustrate an example in which a plurality of networks statically shares resources.
FIG. 4 is a diagram illustrating an example in which the FDM mode and the TDM mode are combined and resources are shared.
FIG. 5 illustrates an example of combining a plurality of networks and sharing resources according to various embodiments of the disclosure.
FIG. 6 illustrates an example of allocating resources in the FDM mode, based on the priority.
FIG. 7 is a block diagram of a network device according to an embodiment of the disclosure.
FIG. 8 is a flowchart illustrating an operation of a network device according to an embodiment of the disclosure.

### [Mode for the Invention]

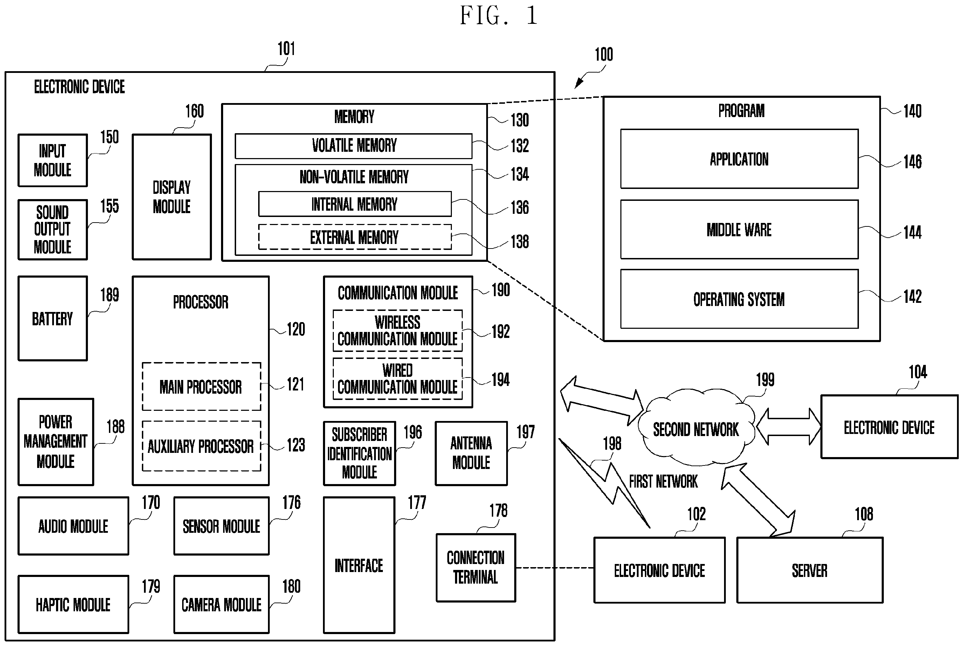

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

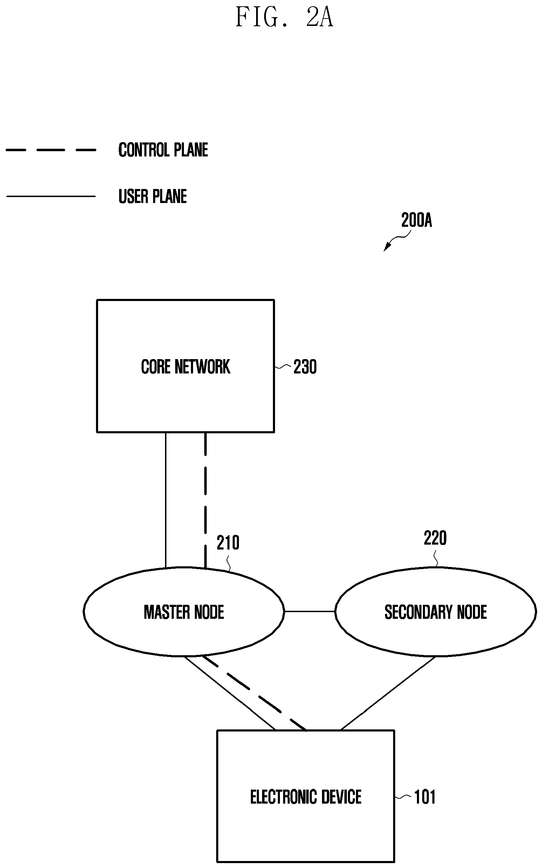

FIGs. 2A to 2C are diagrams illustrating wireless communication systems providing networks of legacy communication and/or 5G communication according to various embodiments. Referring to FIGs. 2A to 2C, network environments 200A to 200C may include at least one of a legacy network and a 5G network. The legacy network may include, for example, a 4G or LTE base station 240 (for example, an eNodeB (eNB)) of the 3GPP standard supporting radio access with the electronic device (for example, the electronic device 101 of FIG. 1) and an evolved packet core (EPC) 242 for managing 4G communication. The 5G network may include, for example, a new radio (NR) base station 250 (for example, a gNodeB (gNB)) supporting radio access with the electronic device 101 and a 5th generation core (5GC) 252 for managing 5G communication of the electronic device 101.

According to various embodiments, the electronic device 101 may transmit and receive a control message and user data through legacy communication and/or 5G communication. The control message may include, for example, a message related to at least one of security control of the electronic device 101, bearer setup, authentication, registration, or mobility management. The user data may be, for example, user data except for a control message transmitted and received between the electronic device 101 and the core network 230 (for example, the EPC 242),

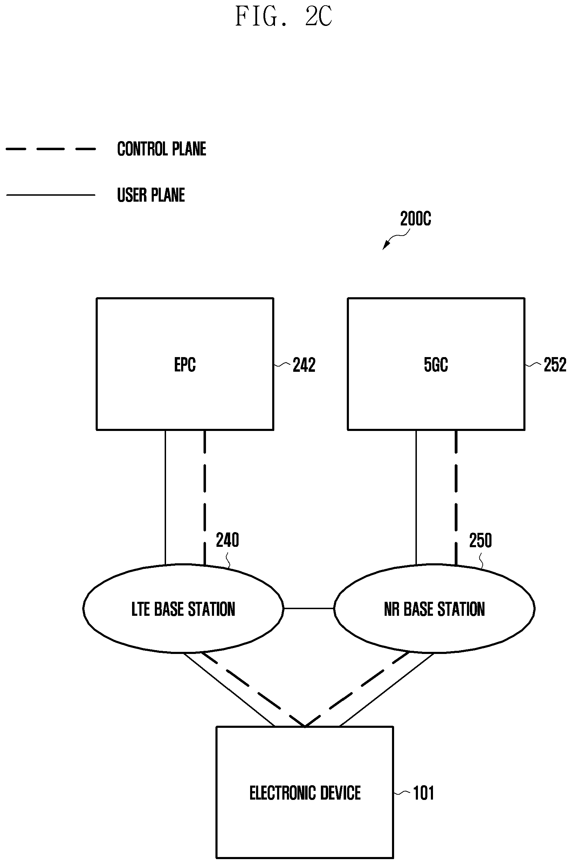

Referring to FIG. 2A, the electronic device 101 according to an embodiment may transmit and receive at least one of a control message or user data to and from at least some of the 5G network (for example, the NR base station 250 and the 5GC 252 of FIG. 2C) using at least some of the legacy network (for example, the LTE base station 240 and the EPC 242 of FIG. 2C).

According to various embodiments, the network environment 200A may include a network environment for providing wireless communication dual connectivity (multi-radio access technology (RAT) dual connectivity (MR-DC)) to the LTE base station 240 and the NR base station 250 and transmitting and receiving a control message to and from the electronic device 101 through one core network 230 of the EPC 242 or the 5GC 252.

According to various embodiments, in the MR-DC environment, one of the LTE base station 240 or the NR base station 250 may operate as a master node (MN) 210, and the other may operate as a secondary node (SN) 220. The MN 210 may be connected to the core network 230 and may transmit and receive a control message. The MN 210 and the SN 220 may be connected through a network interface and may receive a message related to radio resource (for example, communication channel) management.

According to various embodiments, the MN 210 may include the LTE base station 240, the SN 220 may include the NR base station 250, and the core network 230 may include the EPC 242. For example, the control message may be transmitted and received through the LTE base station 240 and the EPC 242, and the user data may be transmitted and received through the LTE base station 240 and the NR base station 250.

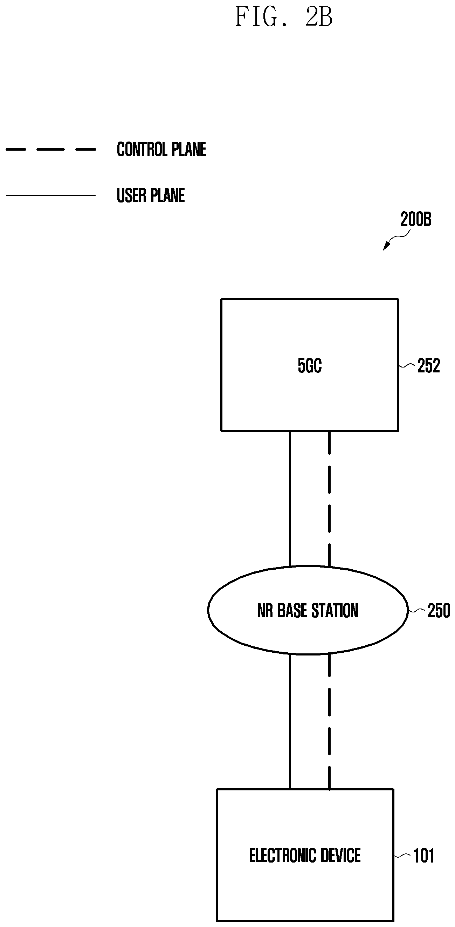

Referring to FIG. 2B, according to various embodiments, the 5GC 252 may transmit and receive the control message and the user data through the NR base station 250 independently from the electronic device 101.

Referring to FIG. 2C, the legacy network and the 5G network according to various embodiments may independently provide data transmission and reception. For example, the electronic device 101 and the EPC 242 may transmit and receive the control message and the user data through the LTE base station 240. In another example, the electronic device 101 and the 5GC 252 may transmit and receive the control message and the user data through the NR base station 250.

According to various embodiments, the electronic device 101 may be registered in at least one of the EPC 242 or the 5GC 252 and may transmit and receive the control message.

According to various embodiments, the EPC 242 or the 5GC 252 may manage communication of the electronic device 101 through interworking. For example, movement information of the electronic device 101 may be transmitted and received through an interface between the EPC 242 and the 5GC 252.

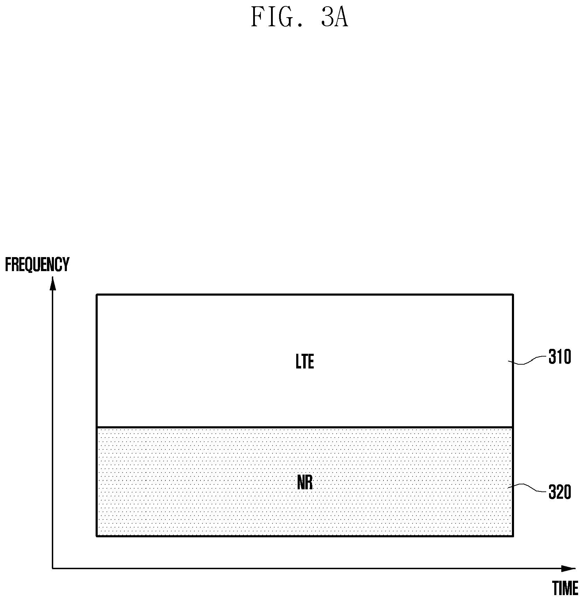

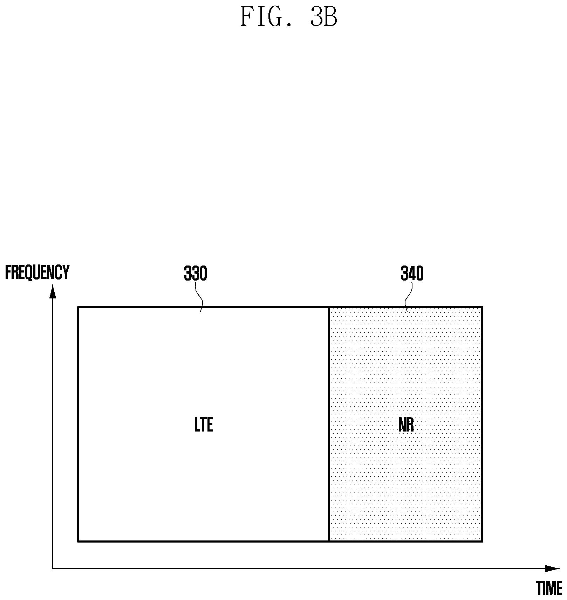

FIGs. 3A and 3B are diagrams illustrating an example in which a plurality of networks statically shares resources.

Referring to FIGs. 3A and 3B, a plurality of networks sharing frequency resources may be a long-term evolution (LTE) network and a new radio (NR) network.

According to an embodiment, the base station may allocate some frequency bands 310 among the shared frequency bands to the electronic device using the LTE network and allocate the remaining frequency bands 320 to the electronic device using the NR network as illustrated in FIG. 3A. As illustrated in FIG. 3A, a mode in which a plurality of networks divides and shares frequencies may be a frequency division multiplexing (FDM) mode. When the base station allocates frequency resources through the FDM mode, the electronic device using the LTE network and the electronic device using the NR network may simultaneously perform communication. In the case of the FDM mode, a frequency band which can be used by each network may be a fixed frequency band.

According to another embodiment, the base station may divide the time and allocate frequency resources to the electronic device using the LTE network and the electronic device using the NR network. As illustrated in FIG. 3B, a mode by which a plurality of communication modes divide and share the time may be a time division multiplexing (TDM) mode. After allocating frequency resources 330 to the electronic device using the LTE network for a predetermined time, the base station may allocate frequency resources 340 to the electronic device using the NR network for the predetermined time.

According to an embodiment, the FDM mode and the TDM mode described with reference to FIGs. 3A and 3B are modes of predetermining and using divided frequency bands or usage time and may be static resource sharing modes. The FDM mode and the TDM mode may have advantages of high transmission efficiency of radio resources, but may have disadvantages in that predetermined frequency bands or time should be used.

FIGs. 3A and 3B illustrate LTE and NR as examples of a plurality of networks, but may be applied to other networks. For example, various embodiments described in the disclosure may be applied to 2G + LTE through evolved multimedia broadcast multicast service (eMBMS), NB-IoT, or RB blanking. Hereinafter, LTE and NR are described as examples of a plurality of networks, but various embodiments described in the disclosure can be applied if at least some of the frequency bands used by the plurality of networks are shared.

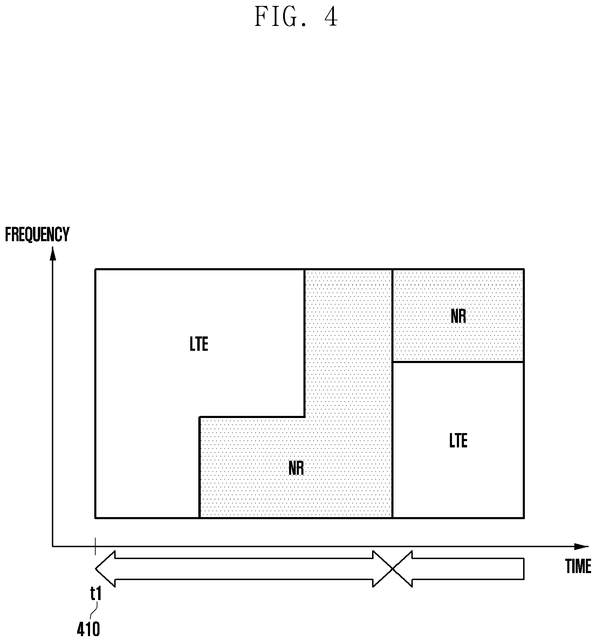

FIG. 4 is a diagram illustrating an example in which the FDM mode and the TDM mode are combined and resources are shared.

According to an embodiment, the base station may reflect frequency resource requirements required by each of the plurality of networks according to the time in order to make up for disadvantages of the FDM mode and the TDM mode and distribute the frequency resources. The base station may allocate frequency resources on the basis of the frequency resource requirements required by each network in units of predetermined time.

For example, the base station may check frequency resource requirements required by the electronic device using the LTE network and the electronic device using the NR network at a time point t1 410 and allocate the resources to respective networks. Thereafter, the base station may check frequency resource requirements required by the electronic device using the LTE network and the electronic device using the NR network at a time point t2 420 and allocate the resources to respective networks.

According to an embodiment, the base station may divide the time and allocate frequency resources to the networks or divide the frequency and allocate the same to the networks. The base station may determine whether to use the FDM mode, the TDM mode, or both the two modes at a time point at which the resources are allocated. Such a mode may be called a semi-static resource sharing mode or a dynamic sharing mode.

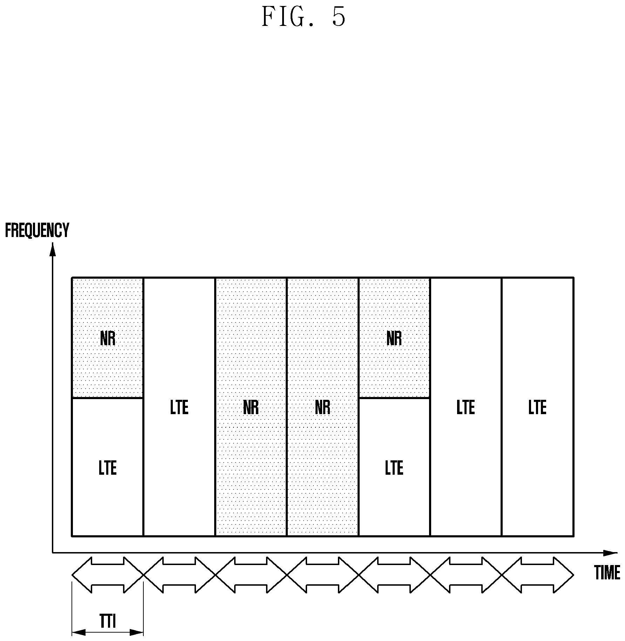

FIG. 5 is a diagram illustrating an example of combining a plurality of networks and sharing resources according to various embodiments of the disclosure.

According to an embodiment, the base station may combine and manage a plurality of networks from a perspective of resource allocation. The base station may combine bearers to which resources should be allocated and allocate the resources regardless of a network type in units of predetermined time. The predetermined time may be, for example, a transmit time interval (TTI).

According to an embodiment, the base station may need a reference (or policy) for allocating resources to the combined bearers regardless of the network type. For example, the reference for allocating resources to bearers may be at least a portion of a bearer priority, resource efficiency, and fairness between services.

According to an embodiment, the base station may determine the reference for allocating resources to bearers and allocate the resources to the bearers. For example, the base station may determine the priority on the basis of the reference for allocating resources to bearers, arrange priorities of the bearers in units of TTIs, and allocate the resources to the bearers in consideration of the arranged priorities.

While resources are allocated in only consideration of the network regardless of the bearer (for example, bearer priority) which should be provided by each network in FIG. 4, bearers may be combined regardless of the network and resources may be allocated according to a reference for allocating resources to bearers in FIG. 5. The mode illustrated in FIG. 5 may be called an instant sharing mode since frequency resources are instantly scheduled.

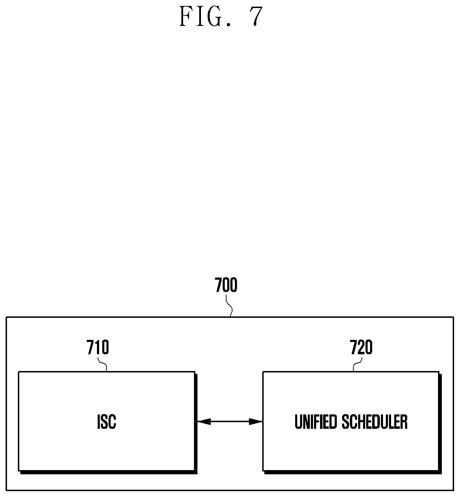

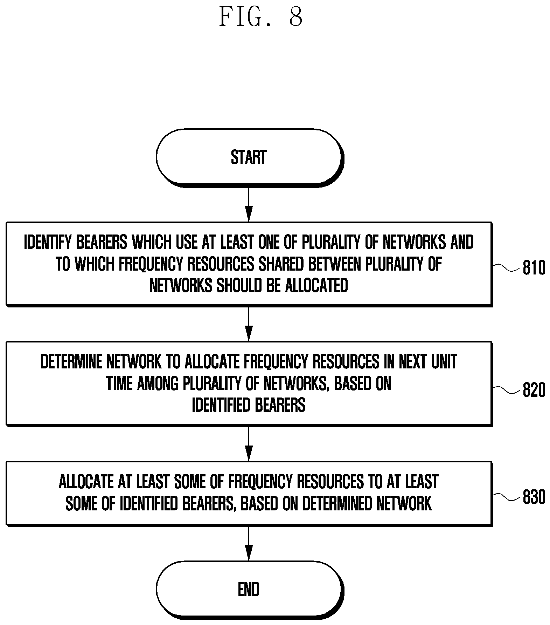

The disclosure relates to the instant sharing mode described with reference to FIG. 5, and the instant sharing mode may be described in detail with reference to FIGs. 7 and 8.

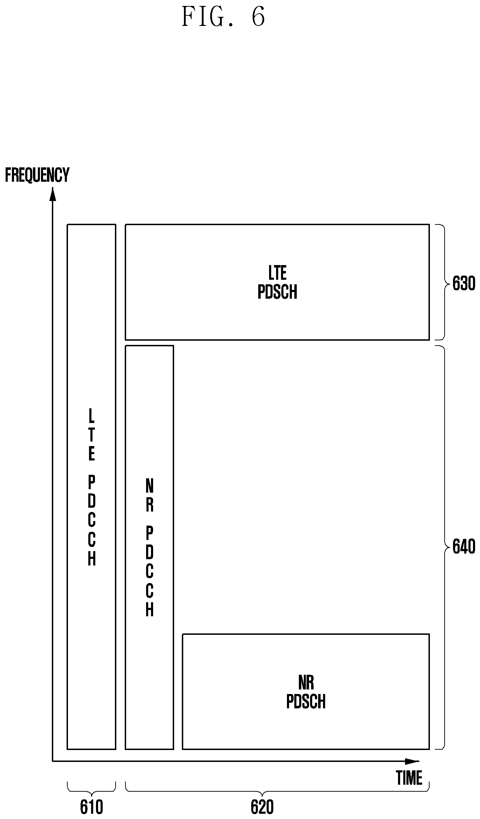

FIG. 6 illustrates an example of allocating resources in the FDM mode, based on the priority.

According to an embodiment, the electronic device 101 may distribute resources to the bearer using the LTE network and the bearer using the NR network through the FDM mode. Referring to FIG. 6, a first interval 610 may be an interval in which resources are allocated to the bearer (for example, LTE PDCCH) using the LTE network in the time domain. A second interval 620 may be an interval in which resources are distributed to the bearer using the LTE network and the bearer using the NR network. In the second interval 620, a first area 630 in the frequency domain may indicate an area allocated to the bearer using the LTE network and a second area 640 may indicate an area allocated to the bearer using the NR network by content between the bearer using the LTE network and the bearer using the NR network. Since the second area 640 is allocated to the bearer using the NR network, the base station cannot allocate the bearer using the LTE network to the second area 640. The second area 640 may be only an NR PDCCH area or an NR PDSCH area, and thus if there is no bearer which the base station should allocate among the bearers using the NR network, a part of the second area 640 may be resources, which are not used, so efficiency may not be good in terms of resource usage.

According to an embodiment, when the base station combines the bearer using the LTE network and the bearer using the NR network and allocates resources in the TDM mode, the resources may be allocated later to the bearer having a relatively low priority, and thus QoS satisfaction may be low in terms of latency.

According to an embodiment, when resources are allocated in the TDM mode, resource efficiency may be maintained high compared to the FDM mode, but the TDM mode may be disadvantageous in terms of flexible resource allocation and latency. Here, the resource latency may be a situation where the time required for resource allocation is delayed. For this reason, quantized frequency allocation in units of resource block groups (RBGs) may increase resource efficiency compared to flexible resource allocation in units of complete resource blocks (RBs).

FIGs. 7 and 8 may describe in detail various embodiments for making up for the problems described in FIG. 6.

FIG. 7 is a block diagram of a network device according to an embodiment of the disclosure.

According to an embodiment, a network device 700 may be a base station. Referring to FIG. 7, the network device 700 may include an instant sharing coordinate (hereinafter, referred to as an "ISC") 710 and a unified scheduler 720. In FIG. 7, the ISC 710 and the unified scheduler 720 are separately described, but it is only for convenience of description, and one element may perform operations/functions of the ISC 710 and the unified scheduler 720 or a plurality of elements may separately perform operations/functions of the ISC 710 and the unified scheduler 720.

According to an embodiment, the ISC 710 may calculate fairness between a plurality of systems and control a specific wireless communication system (for example, LTE or NR) to use the system with the priority in every TTI. The network device 700 may reduce inefficiency of resource distribution that may be generated when only unified scheduling is performed using the method.

The network device 700 may recognize, for example, a busy situation where both LTE and NR resources should be allocated to one transmit time interval (TTI). In the busy situation, the network device 700 may not use the ISC 710 and may preferentially schedule a service having a higher priority without consideration of wireless communication technology. The scheduling method may be referred to as a unified scheduling method. However, the unified scheduling method may be suitable for providing the priority in terms of quality of service (QoS) but may be inefficient in terms of the use of radio frequencies. For example, when the network device 700 simultaneously allocates LTE and NR resources to one transmit time interval (TTI), the space use in at least some spaces (for example, 640 of FIG. 6) may be inefficient.

According to an embodiment, the network device 700 may use a frequency division multiplexing (FDM) structure of allocating a plurality of resources (for example, LTE and NR) to one transmit time interval (TTI), but the frequency division multiplexing (FDM) structure may be inefficient in terms of the use of radio frequencies. On the other hand, the network device 700 may use a time division multiplexing (TDM) structure of allocating one resource to one transmit time interval (TTI), but the time division multiplexing (TDM) structure may be efficient in terms of the use of radio frequencies. Further, the network device 700 may increase frequency usage efficiency when resources are allocated in units of quantized groups like resource block groups (RGBs) rather than when resources are allocated in units of one resource block (RB).

According to an embodiment, the ISC 710 may determine a policy of the instant sharing mode described with reference to FIG. 5. The policy of the instant sharing mode may be a reference for allocating (or scheduling) frequency resources to a plurality of networks.

According to an embodiment, the ISC 710 may identify bearers (or services) of the plurality of networks in order to allocate resources. The ISC 710 may identify bearers to which resources are dynamically allocated in units of predetermined time (for example, TTI). The ISC 710 may further identify the number of required RBs and/or the number of required control channel elements (CCEs), based on the identified bearers. The number of RBs and/or the number of RBs and/or the number of CCEs may be the number expected to be required for PDSCHs and/or PDCCHs. The ISC 710 may determine the policy of the instant sharing mode in consideration of at least some of a priority of each bearer to which resources are allocated, efficiency of frequency resources, and fairness between respective bearers.

According to an embodiment, bearers to which the ISC 710 allocates resources may include one of the bearer using the LTE network and the bearer using the NR network, but may include both the bearer using the LTE network and the bearer using the NR network. The ISC 710 may recognize a situation where a plurality of networks should be supported as the busy situation. When the ISC 710 considers only the bearer priority in order to allocate resources in the busy situation, the resources may be allocated only to the bearer using the one network. In this case, in terms of quality of service (QoS), satisfaction of the service may high since the service having a high priority is supported, but efficiency of the use of radio frequencies may be reduced.

According to an embodiment, the ISC 710 may reflect the fairness of frequency resources previously occupied by a plurality of networks to determine the policy of the instant sharing mode and dynamically allocate resources to bearers. The ISC 710 may select a network that preferentially occupies frequency resources, based on the calculated fairness, in the next unit time (for example, TTI). The ISC 710 may select a network to occupy frequency resources in every unit time. The unit time in which the ISC 710 selects the network to occupy frequency resources may vary depending on several conditions. For example, when all of the connected bearers use the same network, the ISC 710 may increase the unit time before a bearer using another network accesses.

According to an embodiment, the ISC 710 may select a network to preferentially occupy frequency resources in the next unit time, based on a history of the network to which resources were previously allocated. The history of the network to which resources were previously allocated may be, for example, the number of resource blocks (RBs) allocated to each of the plurality of networks, the number of terminals, the number of bearers, an accumulated value, or a combination thereof. The accumulated value may be one of an average value calculated by simply moving a window, an average value calculated using an absolute time window, and an average value calculated using an infinite impulse response (IIR) filter, but an accumulated value calculated using another method is not restricted.

According to an embodiment, the ISC 710 may select a network to preferentially occupy frequency resources in the next unit time in further consideration of a distribution ratio between the plurality of networks. For example, the ISC 710 may select a network to preferentially occupy frequency resources in the next unit time in order to minimize difference between the history of the network to which resources were previously allocated and a targeted distribution ratios between the plurality of networks.

According to an embodiment, the targeted distribution ratio between the plurality of networks may be a ratio of one of the number of terminals to be connected to each network in the unit time, the number of bearers, and the buffer size (buffer occupancy), or may be determined on the basis of a combination thereof. According to another embodiment, the targeted distribution ratio between the plurality of networks may be a randomly configured value.

For example, the ISC 710 may determine the history of the network to which resources were previously allocated as the number of RBS, determine the accumulated value as a value calculated within a predetermined window, and accumulate and calculate the number of RBs allocated to each network on the basis of resources allocated in every unit time and scheduling result according thereto. The ISC 710 may compare the number of accumulated RBs allocated to each network and the targeted distribution ratio between the plurality of networks and select a network to preferentially occupy frequency resources in the number unit time to make the difference smaller. The targeted distribution ratio may be a ratio of the number of terminals connected to each network. [Table 1] below shows an example of selecting a network to preferentially occupy frequency resources in the next unit time. For example, when the ISC 710 determines the network to preferentially occupy frequency resources of slot 2, the ISC 710 may check the number of accumulated RBs of each network in the history. The number of accumulated RB in LTE is 110 but the number of accumulated RBs in NR is 10. The ISC 710 may compare them with a targeted distribution ratio of 5.5 and thus determine that the number of accumulated RBs in NR lacks compared to the number accumulated RBs in LTE and select NR as the network to preferentially occupy frequency resources in the next unit time. The ISC 710 may compare the number of accumulated RBs in LTE and the number of accumulated RBs in NR and select the network to preferentially occupy frequency resources in the next unit time. The ISC 710 may allocate RBs in consideration of the selected network.

**[Table 1]**

| | | | | | |
|---|---|---|---|---|---|
| Busy Slot | 0 | 1 | 2 | 3 | 4 |
| LTE/NR UE ratio | 5:5 | 5:5 | 5:5 | 5:5 | 5:5 |
| LTE targeted ratio | 50% | 50% | 50% | 50% | 50% |
| Total number of RBs | 20 | 120 | 220 | 320 | 420 |
| Number of LTE accumulated RBs | 10 | 110 | 110 | 210 | 210 |
| Number of NR accumulated NR | 10 | 10 | 110 | 110 | 210 |
| LTE RB ratio | 50% | 92% | 50% | 66% | 50% |
| Number of RBs allocated to LTE | 100 | 0 | 100 | 0 | 100 |
| Number of RBs allocated to NR | 0 | 100 | 0 | 100 | 0 |
| Network to preferentially occupy frequency resource in next unit time | LTE | NR | LTE | NR | LTE |

According to an embodiment, the ISC 710 may select the network to preferentially occupy frequency resources in the next unit time only when there is a buffer to receive a service in each network. The ISC 710 may recognize the busy situation and select the network to occupy frequency resources in each unit time through the TDM mode. Although it has been described above that the ISC 710 selects one network for each unit time, the ISC 710 may giving a weight to the bearer priority rather than the network type and allocate resources. For example, the ISC 710 may allocate resources even the bearer which is not supported by the selected network if the bearer (for example, a bearer related to broadcasting information) having a priority higher than a threshold value.

According to an embodiment, the ISC 710 may transfer the selected network to the unified scheduler 720. The ISC 710 may further transfer information on allocated resources (for example, the number of RBs) to the unified scheduler 720.

According to an embodiment, the network device 700 may perform scheduling for different wireless communication technologies (for example, LTE and NR) through the unified scheduler 720 via the same one procedure. The network device 700 may select a bearer to be scheduled on the basis of a predetermined reference. The reference for selecting the bearer may include, for example, a weight for a priority of resource distribution. In this case, the network device 700 may ignore structural constraints on the bearer and select the bearer to be scheduled on the basis of the weight for the priority of resource distribution.

According to an embodiment, the network device 700 may determine a scheduling priority of each resource including LTE and NR on the basis of at least one of a type of each bearer, a type of each data bit, a bearer priority, or a priority of each data bit. When there is contention between priorities during a process of determining the scheduling priority, the network device 700 may determine the priority by configuring a parameter or using a combination of fairness metric.

According to an embodiment, the network device 700 may configure a parameter and determine a bearer which is preferentially selected among a plurality of bearers of LTE and NR. Further, the network device 700 may determine the priorities of bearers within a scheduler through fairness metric. The network device 700 may determine the bearer to be selected at the current time point on the basis of at least one of the time or an amount of processed data.

According to an embodiment, the network device 700 may select a bearer to be scheduled through a unified bearer selection process. The network device 700 may calculate the number of resource blocks (RBs) of a physical downlink shared channel (PDSCH) and the number of control channel elements (CCEs) of a physical downlink control channel (PDCCH) required for scheduling bearers in accordance with a plurality of bearers selected using the ISC 710 during the unified bearer selection process. The network device 700 may allocate resources including LTE and NR on the basis of the calculations.

According to an embodiment, the network device 700 may control different wireless communication technologies (LTE and NR) at the same level. The network device 700 may control resource distribution not to be differentiated through the unified scheduler 720. A method of not differentiating resource distribution may be referred to as a "unified resource allocation method". For example, the network device 700 may sequentially allocate physical downlink shared channel (PDSCH) resources and physical downlink control channel (PDCCH) resources through the unified scheduler 720 and control one entity (for example, unified resource allocation software (not shown) within the network device 700) to allocate all of LTE and NR resources until LTE or NR scheduling of the corresponding TTI ends.

According to an embodiment, the unified scheduler 720 may include a separate scheduler for each network. For example, the unified scheduler 720 may include an LTE scheduler and an NR scheduler. The unified scheduler 720 may receive information required for scheduling bearers from the ISC 710 and control each network to scheduler bearers. The unified scheduler 720 may receive at least one piece of information on the number of DL PDSCH RBs or the number of PDCCH CCEs required for DL/UL scheduling from the ISC 710.

According to an embodiment, the network device 700 may control NR PDCCH resources and NR PDSCH resources to compete through a unified resource allocation method. For example, when allocating LTE PDSCH resources, the unified scheduler 720 may perform a unified resource allocation operation by newly allocating resources only to RB areas to which all of the NR PDCCH area and the NR PDSCH resources are not allocated. At this time, the NR PDCCH area may include not only CCE resources for the NR PDSCH but also resources for the NR physical uplink shared channel (PUSCH). Further, the unified scheduler 720 may assign weights to a plurality of resources through a parameter and control contention between a plurality of resources including CCE resources for the NR PDSCH and resources for the NR physical uplink shared channel (PUSCH). The unified scheduler 720 may perform control to configure minimum resources for specific RAT (LTE/NR) or weights of priorities (for example, forcibly determine the order of provision of a specific service) in the resource distribution order by using a specific parameter (for example, a parameter of which settings can be changed (configurable parameter)).

According to an embodiment, the network device 700 may allocate network resources through the unified bearer selection method and the unified resource allocation method and use the operation of a plurality of wireless communication technologies (for example, LTE and NR) in a protocol data unit (PDU) generation process. For example, the network device 700 may select at least one bearer through the unified bearer selection method and calculate the number of PDSCH RBs and/or PDCCH CCEs required for scheduling each bearer through the ISC 710. The network device 700 may control the resource allocation operation on the basis of the calculated number of PDSCH RBs and/or PDCCH CCEs.

According to an embodiment, the unified scheduler 720 may receive information on the selected network and information on the form of split resources from the ISC 710. The unified scheduler 720 may schedule bearers allocated to respective networks on the basis of the received information on the selected network and the received information on the form of split resources.

According to an embodiment, the network device 700 may determine a scheduling priority of the network on the basis of the type and/or the priority of the bearer to allocate resources. When there is contention between priorities of network scheduling, the network device 700 may determine the network scheduling priority on the basis of a parameter setting or/and fairness metric.

FIG. 8 is a flowchart illustrating an operation of a network device according to an embodiment of the disclosure.

According to an embodiment, a network device (for example, the network device 700 of FIG. 7) may use at least one of a plurality of networks and identify a bearer to which frequency resources shared between the plurality of networks should be allocated in operation 810.

According to an embodiment, the network device 700 may perform scheduling for different wireless communication technologies (for example, LTE and NR) through a unified scheduler (for example, the unified scheduler 720 of FIG. 7) during the one same procedure. The network device 700 may select a bearer to be scheduled on the basis of a predetermined reference. The reference for selecting the bearer may include, for example, a weighted value for a priority of resource distribution. In this case, the network device 700 may ignore structural constraints on the bearer and select the bearer to be scheduled on the basis of the weighted value for the priority of resource distribution. The network device 700 may identify the bearer and calculate resources required for scheduling the bearer.

According to an embodiment, the network device 700 may determine a network to allocate frequency resources in the next unit time among a plurality of networks on the basis of the identified bearer in operation 820. The network to allocate frequency resources in the next unit time may be determined on the basis of a history of the network of resource allocation before the next time unit. The history of the network of resource allocation before the next time unit may include at least some of the number of resource blocks (RBs) allocated to each of a plurality of networks, the number of terminals connected to each of the plurality of networks, the number of bearers connected to each of the plurality of networks, and an accumulated value thereof.

According to an embodiment, the network device 700 may allocate network resources through the unified bearer selection method and the unified resource allocation method and use the operation of a plurality of wireless communication technologies (for example, LTE and NR) in a protocol data unit (PDU) generation process. For example, the network device 700 may select at least one bearer through the unified bearer selection method and calculate the number of PDSCH RBs and/or PDCCH CCEs required for scheduling each bearer through an ISC (for example, the ISC 710 of FIG. 7). The network device 700 may control the resource allocation operation on the basis of the calculated number of PDSCH RBs and/or PDCCH CCEs.

According to an embodiment, the network device 700 may determine a network to allocate frequency resource in the next unit time in further consideration of a distribution ratio between the plurality of networks. The distribution ratio between the plurality of networks may be a ratio between a plurality of networks based on at least some of the number of terminals connected to each of the plurality of networks in the unit time, the number of bearers, and the buffer size.

According to an embodiment, the unified scheduler 720 may receive information on the selected network and information on the form of split resources from the ISC 710. The unified scheduler 720 may schedule bearers allocated to respective networks on the basis of the received information on the selected network and the received information on the form of split resources. According to an embodiment, the network device 700 may determine a ratio of resources to be allocated for each network to allocate frequency resources in the next unit time among the plurality of networks on the basis of the identified bearer. For example, the network device 700 may determine the network to allocate frequency resources in the next time unit and determine a resource allocation ratio for each network.

According to an embodiment, the network device 700 may allocate at least some of frequency resources to at least some of the identified bearers on the basis of the determined network in operation 830. The network device 700 may allocate frequency resources on the basis of priorities of the identified bearers based on the determined network. The network device 700 may allocate frequency resources to bearers having the same priority on the basis of a configured parameter, fairness metric, or a combination thereof.

According to an embodiment, the network device 700 may determine a scheduling priority of the network on the basis of the type and/or the priority of the bearer to allocate resources. When there is contention between priorities of network scheduling, the network device 700 may determine the network scheduling priority on the basis of a parameter setting or/and fairness metric.

According to an embodiment, the network device 700 may allocate at least some of frequency resources to the bearer having a priority higher a threshold value among bearers which are not supported by the determined network.

According to an embodiment, the plurality of networks may include an LTE network and an NR network.

According to various embodiments, a method of operating a network device may include an operation of identifying bearers which use at least one of a plurality of networks and to which frequency resources shared between the plurality of networks should be allocated, an operation of determining a network to allocate the frequency resources in a next unit time among the plurality of networks, based on the identified bearers, and an operation of allocating at least some of the frequency resources to at least some of the identified bearers, based on the determined network.

According to an embodiment, the operation of determining the network may further include an operation of determining the network in consideration of a history of a network of resource allocation before the next unit time and a distribution ratio between the plurality of networks.

According to an embodiment, the history of the network of the resource allocation before the next unit time may include at least some of the number of resource blocks (RBs) allocated to each of the plurality of networks, the number of terminals, the number of bearers, and an accumulated value thereof.

According to an embodiment, the distribution ratio between the plurality of networks may be determined based on at least some of a number of terminals connected to each of the plurality of networks in the next time unit, a number of bearers, and a buffer size.

According to an embodiment, the method of operating the network device may further include an operation of allocating at least some of the frequency resources to bearers having a priority higher than a threshold value among bearers which are not supported by the determined network.

According to an embodiment, the operation of identifying the bearers may include an operation of calculating resources required for scheduling the bearers.

According to an embodiment, the operation of determining the network may include an operation of determining a ratio of resources allocated for each network.

According to an embodiment, the operation of allocating at least some of the frequency resources may include an operation of allocating at least some of the frequency resources to a bearer having a high priority among the identified bearers.

According to an embodiment, the operation of allocating at least some of the frequency resources may further include an operation of allocating at least some of the frequency resources to bearers having an equal priority among the identified bearers, based on a preconfigured parameter, fairness metric, or a combination thereof.

According to an embodiment, the plurality of networks may include an LTE network and an NR network.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A network device comprising:
a communication module; and
a processor,
wherein the processor is configured to:
identify bearers which use at least one of a plurality of networks and to which frequency resources shared between the plurality of networks should be allocated;
determine a network to allocate the frequency resources in a next unit time among the plurality of networks, based on the identified bearers; and
allocate at least some of the frequency resources to at least some of the identified bearers, based on the determined network.

2. The network device of claim 1, wherein the processor is configured to determine the network in consideration of a history of networks to which resources have been allocated before the next unit time and a distribution ratio between the plurality of networks.

3. The network device of claim 2, wherein the history of networks to which resources have been allocated before the next unit time comprises at least some of a number of resource blocks (RBs) allocated to each of the plurality of networks, a number of terminals, a number of bearers, and an accumulated value thereof.

4. The network device of claim 2, wherein the distribution ratio between the plurality of networks is determined based on at least some of a number of terminals connected to each of the plurality of networks in the next time unit, a number of bearers, and a buffer size.

5. The network device of claim 1, wherein the processor is configured to allocate at least some of the frequency resources to bearers having a priority higher than a threshold value among bearers which are not supported by the determined network.

6. The network device of claim 1, wherein the processor is configured to calculate resources required for scheduling the bearers.

7. The network device of claim 1, wherein the processor is configured to determine a ratio of resources allocated for each network.

8. The network device of claim 7, wherein the processor is configured to allocate at least some of the frequency resources to a bearer having a high priority among the identified bearers.

9. The network device of claim 8, wherein the processor is configured to allocate at least some of the frequency resources to bearers having an equal priority among the identified bearers, based on a preconfigured parameter, fairness metric, or a combination thereof.

10. The network device of claim 1, wherein the plurality of networks comprises an LTE network and an NR network.

11. A method of operating a network device, the method comprising:
identifying bearers which use at least one of a plurality of networks and to which frequency resources shared between the plurality of networks should be allocated;
determining a network to allocate the frequency resources in a next unit time among the plurality of networks, based on the identified bearers; and
allocating at least some of the frequency resources to at least some of the identified bearers, based on the determined network.

12. The method of claim 11, wherein the determining of the network comprises determining the network in consideration of a history of networks to which resources have been allocated before the next unit time and a distribution ratio between the plurality of networks.

13. The method of claim 12, wherein the history of networks to which resources have been allocated before the next unit time comprises at least some of a number of resource blocks (RBs) allocated to each of the plurality of networks, a number of terminals, a number of bearers, and an accumulated value thereof.

14. The method of claim 12, wherein the distribution ratio between the plurality of networks is determined based on at least some of a number of terminals connected to each of the plurality of networks in the next time unit, a number of bearers, and a buffer size.

15. The method of claim 11, further comprising allocating at least some of the frequency resources to bearers having a priority higher than a threshold value among bearers which are not supported by the determined network.
